# EUROPEAN PATENT APPLICATION

(11) **EP 4 546 936 A1**
(43) Date of publication of application: **30.04.2025**
(21) Application number: 23826413.9
(22) Date of filing: 20.06.2023
(51) Int. Cl.: H04W 76/15

(54) **METHOD EXECUTED BY USER EQUIPMENT, AND USER EQUIPMENT**

(30) Priority: 21.06.2022 CN 202210707955
(71) Applicant: Sharp Kabushiki Kaisha, Sakai City, Osaka 590-8522 (JP)
(72) Inventor: LIU, Renmao, Shanghai 201206 (CN); ZHANG, Chongming, Shanghai 201206 (CN)
(74) Representative: Müller Hoffmann & Partner
(86) International application number: PCT/CN2023/101353
(87) International publication number: WO 2023/246766

(57) **Abstract**

The present invention provides a method performed by user equipment, and user equipment. The method is a processing method performed during communication performed between the user equipment (UE) and a base station on the basis of a multi-path communication mode, and includes the following steps: initiating, by the UE, an RRC re-establishment procedure in which the UE releases configuration information associated with an indirect connection if the UE is configured with a multi-connectivity path (S401), wherein the multi-connectivity path includes a path through which the UE is directly connected to the base station and a path through which the UE is indirectly connected to the base station, and the configuration information associated with the indirect connection includes information about relay UE for the indirect connection.

## Description

### TECHNICAL FIELD

The present invention relates to the technical field of wireless communications. More specifically, the present invention relates to a method performed by a user equipment, and corresponding user equipment.

### BACKGROUND ART

In a cell covered by a base station, user equipment (UE) can directly communicate with the base station, and such a communication connection is called a direct connection. The UE may also be in communication connection with the base station via relay UE, and such a connection may be referred to as an indirect connection. In a scenario in which the UE communicates with the base station by means of the relay UE, the UE is called remote UE.

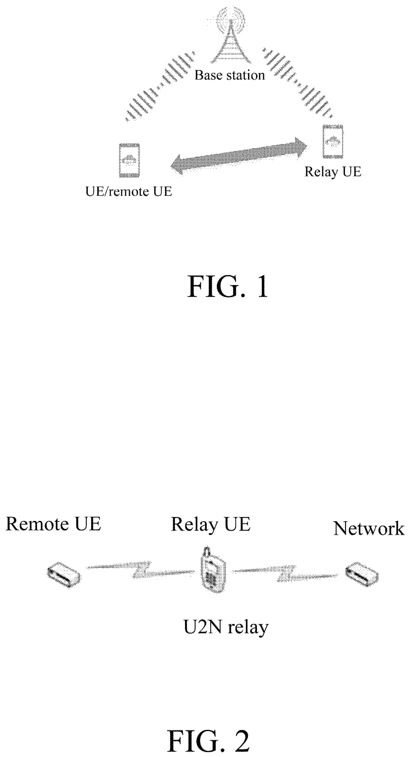

In order to improve uplink and downlink transmission rates and throughput of the UE, the UE may simultaneously operate in a direct connection mode and an indirect connection mode. As shown in FIG. 1, in such an operating mode, the UE and the base station communicate with each other via different paths, so that the operating mode may also be referred to as a multi-path communication mode.

In FIG. 1, a wireless communication mode is typically adopted between remote UE and a base station and between relay UE and the base station, for example, communication techniques and means such as 5G NR or LTE. Moreover, the remote UE and the relay UE may communicate with each other on the basis of a sidelink communication mode, or a Wi-Fi communication mode based on hotspot coverage, or a wired connection mode.

In order to implement the above multi-path communication mode, the base station needs to perform connection configuration and management for the UE. When the UE enters an idle state, or when the UE performs connection re-establishment or undergoes link switching, how to manage an indirect connection path is a problem to be solved.

### SUMMARY OF THE INVENTION

In order to address the aforementioned issue, the present invention provides a method performed by user equipment, and user equipment, which can effectively manage an indirect connection path, thereby reliably implementing the aforementioned multi-path communication mode.

According to an aspect of the present invention, provided is a method performed by user equipment, the method being a processing method performed during communication performed between user equipment (UE) and a base station on the basis of a multi-path communication mode, comprising the following steps:
initiating, by the UE, an RRC re-establishment procedure in which the UE releases configuration information associated with an indirect connection if the UE is configured with a multi-connectivity path,
wherein the multi-connectivity path comprises a path through which the UE is directly connected to the base station and a path through which the UE is indirectly connected to the base station, and the configuration information associated with the indirect connection comprises information about relay UE for the indirect connection.

The foregoing method performed by a user equipment, preferably, further comprises the following step:
releasing, by the UE, the indirect connection.

In the above-described method performed by a user equipment, preferably,
the releasing, by the UE, the indirect connection is implemented in any one of the following manners:
indicating, by the UE, information to an upper layer of an RRC layer, to trigger the release of an indirect path which is connecting to the relay UE; and
performing, by the RRC layer of the UE, a connection release procedure related to the indirect connection.

In the above-described method performed by a user equipment, preferably,
if the UE and the relay UE are connected to each other via PC5, the UE indicates the upper layer of the RRC layer to trigger release of a PC5 connection with the relay UE.

In the above-described method performed by a user equipment, preferably,
if the UE and the relay UE are connected to each other via PC5, the UE performs a PC5 RRC connection release procedure comprising at least one of the following operations:
discarding sidelink configuration information related to the connection or an address corresponding to the connection;
releasing one or more SRBs related to the connection or the address corresponding to the connection;
releasing one or more DRBs related to the connection or the address corresponding to the connection;
resetting a MAC layer related to the connection or the address corresponding to the connection; and
indicating, to the upper layer, that the PC5 RRC connection is released.

The foregoing method performed by a user equipment, preferably, further comprises the following steps:
after performing the operations of releasing the configuration information and releasing the indirect connection, performing, by the UE, cell selection or relay selection, and starting a timer T311 for managing the cell selection;
after the cell selection succeeds, stopping, by the UE, the timer T311; and
after the timer T311 is stopped, starting, by the UE, a timer T301 for managing a re-establishment procedure, and initiating transmission of an RRC connection re-establishment request message.

The foregoing method performed by a user equipment, preferably, further comprises the following step:
when the UE enters an idle state, performing, by the UE, at least one of the following operations:
   resetting the MAC layer;
   if the UE is configured with the multi-connectivity path, releasing the configuration information associated with the indirect connection;
   if the UE is configured with the multi-connectivity path, releasing the indirect connection; and
   discarding a measurement report of an application layer,
wherein, if the UE receives an RRC release message from the base station, or the timer T311 for managing the cell selection expires during the RRC re-establishment procedure, or the timer T301 for managing the re-establishment procedure expires during the RRC re-establishment procedure, the UE enters the idle state.

The foregoing method performed by a user equipment, preferably, further comprises the following step:
if the RRC release message received by the UE carries suspend configuration information, skipping, by the UE, releasing the indirect connection, and storing the configuration information associated with the indirect connection.

The foregoing method performed by a user equipment, preferably, further comprises the following steps:
initiating, by the UE, an RRC resume procedure in which an RRC resume request message carrying indication information 1 for indicating that the connection between the UE and the relay UE is in a normal working state is transmitted to the base station;
if a response message received by the UE from the base station carries instruction information 2 for instructing the UE to restore the indirect connection, restoring, by the UE, configuration information of the indirect connection; and
if the response message received by the UE from the base station does not carry instruction information 2, releasing, by the UE, the configuration information associated with the indirect connection.

According to another aspect of the present invention, provided is a user equipment, comprising:
a processor; and
a memory, having instructions stored therein,
the instructions, when run by the processor, performing the method described above.

The method performed by user equipment and the corresponding user equipment according to the present invention can effectively manage an indirect connection path, thereby reliably implementing the aforementioned multi-path communication mode.

### BRIEF DESCRIPTION OF THE DRAWINGS

FIG. 1 is a schematic diagram showing an operating mode (multi-path) in which a direct connection and an indirect connection are parallel, i.e., a multi-path communication mode.
FIG. 2 is a schematic diagram showing UE-to-network relay.
FIG. 3 is a schematic diagram showing protocol layer structures of an SRB and a split SRB.
FIG. 4 is a flowchart showing a method performed by user equipment (UE) according to an embodiment of the present invention.
FIG. 5 is a simplified structural block diagram of user equipment according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment;
NR: New Radio;
LTE: Long Term Evolution;
eLTE: enhanced Long Term Evolution;
RRC: Radio Resource Control;
MAC: Medium Access Control (layer);
MAC CE: MAC Control Element;
SDAP: Service Data Adaptation Protocol;
SRAP: Sidelink Relay Adaptation Protocol;
RLC: Radio Link Control;
PDCP: Packet Data Convergence Protocol;
PHY: physical layer;
RB: radio bearer;
DRB: Data Radio Bearer;
SRB: Signaling Radio Bearer;
PDU: Protocol Data Unit;
WIFI: Wi-Fi, wireless local area network technology based on the IEEE 802.11 standard;
SDU: Service Data Unit;
V2X: Vehicle-to-Everything.

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type.

In the present invention, sidelink and PC5 may be used interchangeably, and an RLC channel, an RLC entity, and an RLC bearer may be used interchangeably. In addition, PC5 is used for relay operations herein, and can therefore also be replaced with relay.

Hereinafter, a description will be given of related art of the present invention.

### Multi-path Communication

As shown in FIG. 1, UE and a base station may communicate with each other via a direct connection and an indirect connection. The UE may be configured to simultaneously operate in a communication mode of a direct connection and an indirect connection, and such a communication mode may be referred to as multi-path communication. A direct connection path may be referred to as a direct path, and an indirect connection path may be referred to as a relay path or an indirect path.

Specifically, as shown in FIG. 1, remote UE and relay UE are connected to the same base station, i.e., the same master node (MN). There may also be a case in which the remote UE and the relay UE are connected to different base stations, and the content of the present invention is also applicable, and is not limited herein.

The direct connection and the direct path are interchangeable herein. The indirect connection, the relay path, and the indirect path are interchangeable.

Multi-path communication may also be replaced herein with multi-connection communication.

### Proximity services (ProSe) Communication Between UE (UE to UE, U2U communication)

A UE and a UE may be wirelessly connected to each other by using a proximity services communication means, so as to achieve transmission of data or signaling. The proximity services communication means mentioned herein primarily refers to a sidelink connection, or a Wi-Fi connection, or another connection means. A sidelink connection-based reference point between a UE unit and a UE unit is referred to as PC5, and therefore a sidelink-based connection between the UE may be referred to as a PC5 connection. Sidelink connection and PC5 connection are interchangeable herein. Such a PC5 connection may be identified by a pair of Layer-2 identities (IDs) typically including a source Layer-2 identity (ID) and a destination Layer-2 identity (ID). Such a PC5 connection may be simply referred to as a PC5 connection, a sidelink connection, or the like for or corresponding to a certain destination.

### Sidelink Radio Link Failure (SL RLF)

In the following scenario, UE may determine that a radio link failure has occurred on a sidelink connection for a specific destination:
upon reception of an indication from a sidelink RLC entity that the maximum number of retransmissions for a specific destination has been reached;
upon expiry of a timer T400 for a specific destination;
upon reception of an indication from a MAC entity that the maximum number of consecutive HARQ DTX detected for a specific destination has been reached (upon indication from MAC entity that the maximum number of consecutive HARQ DTX for a specific destination has been reached); or
upon indication, from a PDCP entity concerning a sidelink signal radio bearer for a specific destination, that integrity check failure has occurred (upon integrity check failure indication from a sidelink PDCP entity concerning SL-SRB for a specific destination).

In a sidelink connection or a PC5 connection, one specific destination corresponds to one PC5 connection, therefore it can be considered that an SL RLF has occurred on a sidelink connection or a PC5 connection corresponding to the address.

### UE-to-Network Relay (U2N relay)

As shown in FIG. 2, the left side is remote UE, the middle is relay UE, and the right side is a base station/network. The remote UE and the relay UE may be connected to each other via the aforementioned PC5 interface, or Wi-Fi, or another connection means. The PC5 connection is mainly used as an example herein. The relay UE and the network may be connected via a Uu interface. The relay UE relays and forwards signaling and data between the remote UE and the base station.

### Uu interface

A wireless communication interface between UE and a base station. The UE may communicate with eNB over the Uu interface by using an E-UTRAN. The UE may also communicate with gNB over the Uu interface by using NR.

### Uu Radio Link Failure (Uu RLF)

The UE may determine that a radio link failure is detected at the Uu interface in the following cases:
- a random access problem indication is received from MAC (upon random access problem indication);
- an indication that the maximum number of retransmissions has been reached is received from an RLC (upon indication from RLC that the maximum number of retransmissions has been reached); and
- a timer T310 or T312 related to radio link detection expires (upon T310/T312 expiry).

### RRC Connection Re-establishment

In order to resume communication with the base station or the network side, the UE in the connected state needs to re-establish the RRC connection. To achieve the foregoing purpose, the UE performs an RRC connection re-establishment procedure. During initiation of the foregoing procedure, the UE starts a timer T311 for management of the connection resume procedure.

### Timer T304

In the prior art, when the UE receives an RRC connection reconfiguration message from the base station, and the message instructs the UE to perform reconfiguration with sync or a handover/switch, the UE starts the timer T304 to manage the synchronization procedure. If the reconfiguration with sync is successfully completed, the UE stops T304. If T304 expires, this means that the reconfiguration with sync procedure fails, and the UE triggers the RRC connection re-establishment procedure in which the UE transmits an RRC re-establishment request (RRCReestablishmentRequest) message to the base station.

### Signal Radio Bearer (SRB) and Split SRB

During communication between the UE and the base station, the SRB is used to bear signaling. The UE encapsulates, via a Uu PDCP layer, data of messages to the network for air interface RRC connection setup, re-establishment, resume, etc., and then submits the same to a Uu RLC entity to be further encapsulated, borne on a Uu RLC channel, and submitted downwards layer by layer via Uu-MAC and Uu-PHY. Conversely, an RRC message transmitted by the network to the UE also arrives at the UE via the SRB. Such an SRB may be referred to as an SRB via a direct connection or an SRB via a direct path.

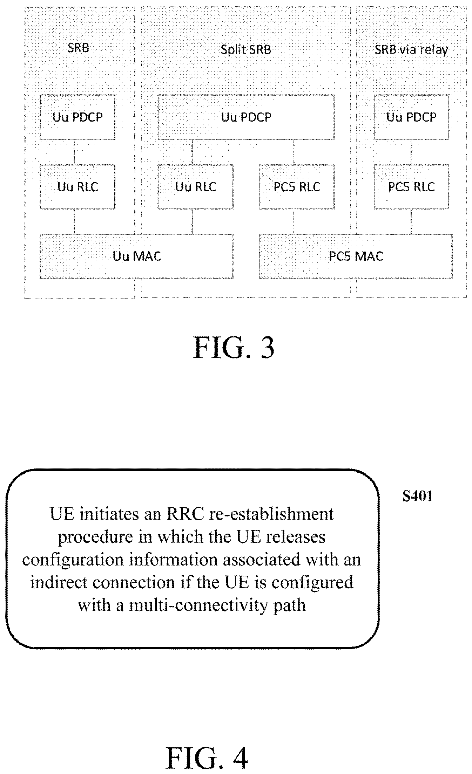

In the multi-path configuration, the UE may be configured with a split SRB, the protocol structure of which is as shown in FIG. 3. After the Uu PDCP layer encapsulates data, the UE may submit the encapsulated data to Uu RLC or PC5 RLC as required. If the data is submitted to Uu RLC, processing is the same as that in the case of the SRB. If the data is submitted to PC5 RLC, the data is borne on a PC5 RLC channel after further encapsulation, submitted downwards layer by layer via PC5-MAC and PC5-PHY, and finally transmitted to the base station/network via a relay path. If the data is submitted to Uu RLC, as in the case of the SRB, the data is finally transmitted to the base station/network via a direct path. Such a split SRB may be referred to as a split SRB via a multi path or a split SRB via a relay path (split SRB via relay).

In the multi-path configuration, the UE may be further configured with an SRB via relay, the protocol structure of which is as shown in FIG. 3. After the Uu PDCP layer encapsulates data, the encapsulated data is submitted to a PC5 RLC entity to be further encapsulated, borne on a PC5 RLC channel, submitted downwards layer by layer via PC5 MAC and PC5 PHY, transmitted to relay UE, and is then forwarded to the network/base station. Conversely, an RRC message transmitted by the network to the UE may also arrive at the UE via an SRB via relay via the relay UE. Such an SRB via relay may also be referred to as an SRB via a relay path or an SRB via an indirect connection.

According to contents that are borne, signal radio bearers (SRBs) may be divided into the following types:
SRB0: used to bear an RRC message transmitted using a logical channel of a common control channel (CCCH).
SRB1: used to bear an RRC message and a non-access stratum message (NAS) transmitted using a logical channel corresponding to a dedicated control channel (DCCH).
SRB2: a non-access stratum (NAS) message and an RRC message carrying measurement information transmitted using a logical channel corresponding to a dedicated control channel.

Specific embodiments are provided below to describe a processing method of the present invention.

### Embodiment 1

The present embodiment provides a method performed by user equipment (UE), the method being a processing method performed during communication performed between the UE and a base station on the basis of a multi-path communication mode. As shown in FIG. 4, the method includes the following steps:
Step S401: initiating, by the UE, an RRC re-establishment procedure. In the procedure, the UE may release configuration information associated with an indirect connection if the UE is configured with a multi-connectivity path, wherein the multi-connectivity path includes a path through which the UE is directly connected to the base station and a path through which the UE is indirectly connected to the base station. Optionally, the UE may also release the indirect connection.

The configuration information associated with the indirect connection may include information about relay UE for the indirect connection, and include at least a UE identity, e.g., an L2 ID, of the relay UE, and for example, may further include configuration information of path addition. On the basis of the configuration information, the UE may establish the path of the indirect connection, etc.

Release of the indirect connection may be implemented in any one of the following manners:
Manner 1: the UE indicates information, to an upper layer of an RRC layer, to trigger the release of an indirect path which is connecting to the relay UE. For example, if the UE and the relay UE are connected to each other via PC5, the UE may indicate the upper layer of the RRC layer to trigger release of a PC5 connection with the relay UE. If the connection between the relay UE and the remote UE is based on Wi-Fi or another connection, the connection may be released via triggering performed by the upper layer.
Manner 2: the RRC layer of the UE performs a connection release procedure related to the indirect connection. For example, if the UE and the relay UE are connected to each other via PC5, the UE may perform a PC5 RRC connection release procedure that may specifically include one or more of the following operations:
   discarding sidelink configuration information related to the connection or an address corresponding to the connection;
   releasing one or more SRBs related to the connection or the address corresponding to the connection;
   releasing one or more DRBs related to the connection or the address corresponding to the connection;
   resetting a MAC layer related to the connection or the address corresponding to the connection; and
   indicating, to the upper layer, that the PC5 RRC connection is released.

In addition, after performing the operations of releasing the configuration and releasing the connection in the RRC re-establishment procedure, the UE may perform cell selection or relay selection, and start a timer T311 for cell management. When a suitable cell is selected, the UE stops T311, and then the UE starts a timer T301 for re-establishment management, and initiates transmission of an RRC connection re-establishment request (RRCReestablishmentRequest) message.

### Embodiment 2

When the UE enters an idle state (IDLE), the UE may perform one or more of the following operations:
- resetting the MAC layer;
- if the UE is configured with the multi-connectivity path, releasing the configuration information associated with the indirect connection, the specific operation of which is the same as that in Embodiment 1;
- if the UE is configured with the multi-connectivity path, releasing the indirect connection, the specific operation of which is the same as that in Embodiment 1; and
- discarding a measurement report of an application layer.

A reason for triggering or causing the UE to enter the idle state may be that the UE receives an RRC release message from the base station or the network side, or that the timer T311 for managing the cell selection expires during the RRC re-establishment procedure, or that the timer T301 for managing the re-establishment procedure expires during the RRC re-establishment procedure. The UE enters the idle state in these cases.

A possible implementation manner may be as follows: when the UE receives the RRC release message, if the UE is configured with the multi-connectivity path, the UE may release the configuration information associated with the indirect connection. Optionally, the UE may also release the indirect connection.

Embodiment 1 and Embodiment 2 may be operated separately, or may be performed in combination.

### Embodiment 3

In a case, if the RRC release message received by the UE carries suspend configuration information, the UE in a connected state (CONNECTED) enters an inactive state (INACTIVE) on the basis of the suspend configuration information. In this case, the UE may not release the indirect connection, and the UE may also store the configuration information associated with the indirect connection. In this case, how to cause the UE to restore the indirect connection is also a problem to be solved.

Since the RRC release message previously received by the UE carries the suspend configuration information, the UE enters the inactive state (INACTIVE). The UE may restore the indirect connection the next time the UE enters the RRC connected state. In order for the UE in the inactive state to enter the RRC connected state, an RRC resume procedure needs to be initiated. In order to be able to successfully restore the indirect connection, the UE may transmit an RRC resume request (RRCResumeRequest) message to the base station in an RRC resume procedure. The message carries indication information 1 for indicating that the connection between the UE and the relay UE is in a normal working state, for example, related information such as a level value of the connection between the UE and the relay UE satisfying a preconfigured threshold, or no failure occurring in the connection between the UE and the relay UE, which may be said to be in the normal working state, or may directly indicate that there is still a connection between the UE and the relay UE. Preferably, the relay UE is the relay UE previously used for the indirect connection.

Upon receiving the RRC resume request (RRCResumeRequest) message carrying indication information 1, if the UE needs to be instructed to restore the indirect connection, the base station may carry instruction information 2 in a response message (an RRCResume message) transmitted to the UE so as to instruct the UE to restore the indirect connection. Upon receiving the response message (the RRCResume message) carrying instruction information 2, the UE may restore configuration information of the indirect connection, and perform configuration by applying the configuration information.

If the UE receives, after transmitting the RRC resume request (RRCResumeRequest) message carrying indication information 1 to the base station or the network side, the response message (the RRCResume message) transmitted from the base station or the network side, but the message does not carry instruction information 2, the UE may release the configuration information associated with the indirect connection as in Embodiment 1. Optionally, the UE may also release the indirect connection.

In addition, after the UE enters the inactive state, if the connection between the UE and the relay UE fails, or the connection is released due to various reasons such as the failure, the UE may release the stored configuration information of the indirect connection at the same time when the connection is released. Alternatively, in an RRC resume procedure performed subsequently, the UE does not carry indication information 1, or carries indication information 3 in the RRC resume request (RRCResumeRequest) message. Indication information 3 indicates that the connection between the UE and the relay UE has been released or failed. Then, after the UE receives the response message (the RRCResume message), the UE releases the previously stored configuration information of the indirect connection since instruction information 2 described above is not carried.

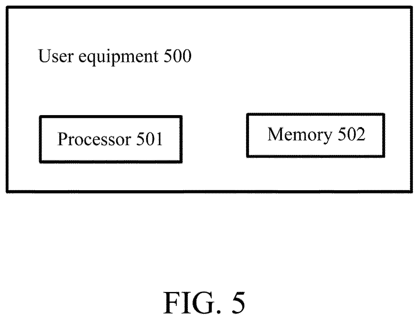

FIG. 5 is a simplified structural block diagram of user equipment according to the present invention.

As shown in FIG. 5, the user equipment 500 includes at least a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memory systems, etc. The memory 502 has program instructions stored thereon. When the instructions are run by the processor 501, one or several steps in the processing method for UE of the present disclosure can be performed.

The method and related equipment according to the present disclosure have been described above in conjunction with preferred embodiments. It should be understood by those skilled in the art that the method shown above is only exemplary, and the above embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. A person skilled in the art could make various alterations and modifications according to the teachings of the illustrated embodiments.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment, the method being a processing method performed during communication performed between the user equipment (UE) and a base station on the basis of a multi-path communication mode, comprising the following steps:
initiating, by the UE, an RRC re-establishment procedure in which the UE releases configuration information associated with an indirect connection if the UE is configured with a multi-connectivity path,
wherein the multi-connectivity path comprises a path through which the UE is directly connected to the base station and a path through which the UE is indirectly connected to the base station, and the configuration information associated with the indirect connection comprises information about relay UE for the indirect connection.

2. The method performed by user equipment according to claim 1, further comprising the following step:
releasing, by the UE, the indirect connection.

3. The method performed by user equipment according to claim 2, wherein
the releasing, by the UE, the indirect connection is implemented in any one of the following manners:
indicating, by the UE, information to an upper layer of an RRC layer, to trigger the release of an indirect path which is connecting to the relay UE; and
performing, by the RRC layer of the UE, a connection release procedure related to the indirect connection.

4. The method performed by user equipment according to claim 3, wherein
if the UE and the relay UE are connected to each other via PC5, the UE indicates the upper layer of the RRC layer to trigger release of a PC5 connection with the relay UE.

5. The method performed by user equipment according to claim 3, wherein
if the UE and the relay UE are connected to each other via PC5, the UE performs a PC5 RRC connection release procedure comprising at least one of the following operations:
discarding sidelink configuration information related to the connection or an address corresponding to the connection;
releasing one or more SRBs related to the connection or the address corresponding to the connection;
releasing one or more DRBs related to the connection or the address corresponding to the connection;
resetting a MAC layer related to the connection or the address corresponding to the connection; and
indicating, to the upper layer, that the PC5 RRC connection is released.

6. The method performed by user equipment according to any one of claims 1 to 5, further comprising the following steps:
after performing operations of releasing the configuration information and releasing the indirect connection, performing, by the UE, cell selection or relay selection, and starting a timer T311 for managing the cell selection;
after the cell selection succeeds, stopping, by the UE, the timer T311; and
after the timer T311 is stopped, starting, by the UE, a timer T301 for managing a re-establishment procedure, and initiating transmission of an RRC connection re-establishment request message.

7. The method performed by user equipment according to claim 6, further comprising the following steps:
when the UE enters an idle state, performing, by the UE, at least one of the following operations:
resetting a MAC layer;
if the UE is configured with the multi-connectivity path, releasing the configuration information associated with the indirect connection;
if the UE is configured with the multi-connectivity path, releasing the indirect connection; and
discarding a measurement report of an application layer,
wherein, if the UE receives an RRC release message from the base station, or the timer T311 for managing the cell selection expires during the RRC re-establishment procedure, or the timer T301 for managing the re-establishment procedure expires during the RRC re-establishment procedure, the UE enters the idle state.

8. The method performed by user equipment according to any one of claims 1 to 5, further comprising the following step:
if an RRC release message received by the UE carries suspend configuration information, skipping, by the UE, releasing the indirect connection, and storing the configuration information associated with the indirect connection.

9. The method performed by user equipment according to claim 8, further comprising the following steps:
initiating, by the UE, an RRC resume procedure in which an RRC resume request message carrying indication information 1 for indicating that a connection between the UE and the relay UE is in a normal working state is transmitted to the base station;
if a response message received by the UE from the base station carries instruction information 2 for instructing the UE to restore the indirect connection, restoring, by the UE, configuration information of the indirect connection; and
if the response message received by the UE from the base station does not carry instruction information 2, releasing, by the UE, the configuration information associated with the indirect connection.

10. User equipment, comprising:
a processor; and
a memory, having instructions stored therein,
wherein the instructions, when run by the processor, perform the method according to any one of claims 1 to 9.
